# EUROPÄISCHE PATENTSCHRIFT

(11) **EP 2 443 728 B1**
(45) Veröffentlichungstag und Bekanntmachung des Hinweises auf die Patenterteilung: **15.05.2013**
(21) Anmeldenummer: 09776847.7
(22) Anmeldetag: 16.06.2009
(51) Int. Cl.: H02M 1/096

(54) **PARALLEL ZUM LEISTUNGSSCHALTER GESCHALTETE STROMVERSORGUNG FÜR DESSEN STEUERSCHALTUNG**
POWER SUPPLY CONNECTED IN PARALLEL TO A POWER SWITCH FOR THE CONTROL CIRCUIT THEREOF
ALIMENTATION EN COURANT MONTÉE EN PARALLÈLE AVEC UN COMMUTATEUR DE PUISSANCE POUR SON CIRCUIT DE COMMANDE

(43) Veröffentlichungstag der Anmeldung: 25.04.2012
(73) Patentinhaber: Siemens Aktiengesellschaft, 80333 München (DE)
(72) Erfinder: STAHLHUT, Nils, 91341 Röttenbach (DE)
(86) Internationale Anmeldenummer: PCT/EP2009/004616
(87) Internationale Veröffentlichungsnummer: WO 2010/145682

(56) Entgegenhaltungen:
- EP-A- 0 271 687
- EP-B- 0 868 014
- DE-A1- 10 045 093
- US-A- 3 961 204

## Beschreibung

Die Erfindung betrifft eine Stromrichterschaltung zum Erzeugen einer Versorgungsspannung mit einem Leistungshalbleiterschalter, Spannungserzeugungsmitteln in einem Parallelzweig zum Leistungshalbleiterschalter, die zur Erzeugung einer Speisespannung eingerichtet sind, Umspannmitteln, die mit den Spannungserzeugungsmitteln verbunden und zum Überführen der Speisespannung in eine Zwischenwechselspannung eingerichtet sind, und einer Gleichrichtereinheit zum Gleichrichten der Zwischenwechselspannung unter Gewinnung der Versorgungsspannung.

Die Erfindung betrifft ferner einen Umrichter mit einer Brückenschaltung von Stromrichterventilen, wobei die Stromrichterventile eine Reihenschaltung aus solchen Stromrichterschaltungen aufweist.

Eine solche Stromrichterschaltung und ein solcher Umrichter sind aus der DE 100 45 093 A1 bereits bekannt. Die dort beschriebene Stromrichterschaltung verfügt über einen abschaltbaren Thyristor (GTO) als Leistungshalbleiterschalter. In einem Überbrückungszweig parallel zum abschaltbaren Leistungshalbleiter ist eine so genannte Schutzbeschaltung angeordnet, die dem Fachmann auch unter dem englischen Begriff "Snubber" bekannt ist. Die Schutzbeschaltung besteht im Wesentlichen aus einem Begrenzungswiderstand sowie einem Schutzkondensator, die in Reihe geschaltet sind. Die Schutzbeschaltung dient dazu, einen zu schnellen Spannungsanstieg beim Abschalten des Leistungshalbleiterschalters und einen zu hohen Spannungsabfall am Leistungshalbleiterschalter zu vermeiden. Dabei ist der Leistungshalbleiterschalter Teil eines Stromrichters im Bereich der Energieübertragung und befindet sich im Betrieb auf einem Hochspannungspotenzial. Zum Erzeugen elektrischer Steuersignale für den Leistungshalbleiterschalter dient eine so genannte Ansteuereinheit, die in der Regel über einen elektrisch nicht leitenden Lichtwellenleiter mit Regelungseinheit verbunden ist, die auf einem dem Erdpotenzial nahen Potenzial liegt. Die Regelungseinheit stellt ausgangsseitig optische Zündsignale bereit, die über den Lichtwellenleiter zu der auf einem Hochspannungspotenzial liegenden Ansteuereinheit übertragen werden. Die Ansteuereinheit erzeugt ausgehend von den optischen Steuersignalen elektrische Steuersignale für den Leistungshalbleiterschalter, der auf diese Weise zwischen einem hochohmigen, also nicht leitenden Zustand und einem niederohmigen, leitenden Zustand hin und her geschaltet wird.

Zur Energieversorgung der Ansteuereinheit wird eine an dem Schutzkondensator abfallende Gleichspannung abgegriffen und einem Schaltnetzteil zugeführt, wobei das Schaltnetzteil einen Transistor zum Zerhacken der Gleichspannung unter Erzeugung einer Rechteckspannung aufweist. Die so gewonnene Rechteckspannung wird einem Transformator als Umspannmittel zugeführt, der die Rechteckspannung in die gewünschte Zwischenwechselspannung überträgt. Dem Transformator ist ein Gleichrichter nachgeschaltet, der aus der vom Transformator ausgangsseitig bereitgestellten Zwischenwechselspannung die notwendige Versorgungsspannung für die Ansteuereinheit des Leistungshalbleiterschalters bereitstellt.

Die US 3,961,204 offenbart eine Stromrichterschaltung, bei der eine Wechselspannung, die an einer Primärwicklung eines Transformators anliegt, als Speisespannung eingesetzt wird. Der Primärwicklung ist ein Kondensator parallel geschaltet, der vor Spannungssprüngen schützen soll.

Eine weitere Stromrichterschaltung gemäß dem Stand der Technik ist aus der EP 0 271 687 A2 bekannt.

Die EP 0 868 014 B1 offenbart ebenfalls eine Stromrichterschaltung, mit der die Erzeugung einer Versorgungsspannung für eine Ansteuereinheit eines Leistungshalbleiterschalters ermöglicht ist. In diesem Fall ist der Leistungshalbleiterschalter ein so genannter IGBT, dem eine Freilaufdiode gegensinnig parallel geschaltet ist. In einem Parallelzweig zum IGBT und zur Freilaufdiode ist wiederum ein Strombegrenzungswiderstand sowie ein Schutzkondensator angeordnet. Mit Hilfe eines Spannungsteilers wird ein Teil der an dem Schutzkondensator abfallenden Spannung abgegriffen und zum Laden eines Spannungserzeugungsmittels, das dort als Kondensator realisiert ist, auf eine Gleichspannung von etwa 300 V verwendet. Die an dem besagten Kondensator abfallende Spannung wird durch eine Regelung des Stromflusses in einem Bypasszweig, der parallel zum Kondensator verläuft, aufwändig geregelt. Darüber hinaus sind Dämpfungsmittel vorgesehen. Schließlich sind Umspannmittel in Form eines Tief- oder Hochstellers offenbart, die eingangsseitig mit dem geregelten Kondensator verbunden sind und ausgangsseitig die gewünschte Versorgungsspannung als Gleichspannung bereitstellen.

Aufgabe der Erfindung ist es, eine Stromrichterschaltung der eingangs genannten Art bereitzustellen, die robust ist und einen einfachen sowie kostengünstigen Aufbau aufweist.

Die Erfindung löst diese Aufgabe dadurch, dass die Spannungserzeugungsmittel als Diodeneinheit realisiert sind, die gegensinnig parallel zueinander geschaltete Dioden aufweist, wobei die Diodeneinheit im Parallelzweig zum Leistungshalbleiterschalter angeordnet ist.

Erfindungsgemäß dienen zwei gegensinnig zueinander parallel geschaltete Dioden zur Erzeugung einer Ausgangswechselspannung. Durch die gegensinnig parallel geschalteten Dioden ist eine Diodeneinheit ausgebildet, durch welche beim Schalten des Leistungshalbleiters, der parallel zur Diodeneinheit angeordnet ist, in beiden Richtungen ein Strom fließt. In Folge dessen fällt an den Dioden der Diodeneinheit eine wechselförmige Durchlassspannung U_{D} ab. Diese Durchlassspannung ist über einen großen Bereich der Stromstärke hinsichtlich ihrer Amplitude nahezu konstant. Durch die Diodeneinheit wird der Beschaltungsstrom somit in eine Wechselspannung konstanter Größe umgewandelt, die hier als Speisespannung bezeichnet ist. Die Speisespannung wird anschließend zum gewünschten Spannungsniveau transformiert und die transformierte Zwischenwechselspannung gleichgerichtet, so dass die gewünschte gleichgerichtete Versorgungsspannung bereit steht. Erfindungsgemäß sind daher fehleranfällige Schalt- oder Regelelemente vermieden. Es ist ein einfacher und robuster Aufbau bereitgestellt, der ohne zusätzliche Beschaltungselemente, wie bei den Stromrichterschaltungen gemäß dem Stand der Technik, auskommt. Im Rahmen der Erfindung ist auch kein Dämpfungskreis erforderlich. Darüber hinaus können beide Polaritäten des Beschaltungsstromes ausgenutzt werden. Durch die Umspannmittel ist eine Potenzialtrennung bereitgestellt, die je nach Anwendungsfall, vorteilhaft sein kann. Darüber hinaus können die Dioden, die keinerlei Ansteuerung benötigen, von den übrigen Komponenten der Stromrichterschaltung räumlich getrennt werden. Sie sind vorteilhafterweise wärmeleitend mit einer Kühlung des Leistungshalbleiters verbunden, so dass die beim Erzeugen der Speisespannung entstehende Wärme sicher abgeführt werden kann.

Vorteilhafterweise ist parallel zum Leistungshalbleiterschalter ein Parallelzweig geschaltet, in dem ein Strombegrenzungswiderstand, ein Schutzkondensator und die Diodeneinheit in Reihe angeordnet sind. Dabei bilden der Strombegrenzungswiderstand und der Schutzkondensator eine so genannte Schutzbeschaltung aus, die im englischen Sprachraum unter dem Begriff "Snubber" bekannt ist. Somit ist sichergestellt, dass der gesamte Beschaltungsstrom durch die Diodeneinheit fließt. Zweckmäßigerweise ist die Diodeneinheit mit der Kathode des Leistungshalbleiterschalters direkt und mit der Anode des Leistungshalbleiterschalters über den Schutzkondensator und den Begrenzungswiderstand verbunden.

Zweckmäßigerweise sind die Umspannmittel ein Transformator, wobei eine erste Wicklung des Transformators mit der Diodeneinheit und die zweite Wicklung des Transformators mit der Gleichrichtereinheit verbunden ist. Wie bereits weiter oben ausgeführt wurde, stellt der Transformator eine Potenzialtrennung zwischen der Gleichrichtereinheit und der Diodeneinheit bereit, so dass die der Gleichrichtereinheit nachgeordneten Komponenten vom Potenzial der Schutzbeschaltung und der Diodeneinheit unabhängig sind. Auch negative Spannungen können somit ausgangsseitig des Transformators erzeugt werden.

Vorteilhafterweise sind Filtermittel vorgesehen. Diese Filtermittel sind zweckmäßigerweise zwischen der Diodeneinheit und der Umspannmittel angeordnet und dienen der Glättung der Wechselspannung als Speisespannung, die durch die Diodeneinheit erzeugt wird.

Zweckmäßigerweise ist der Leistungshalbleiterschalter ein Thyristor.

Abweichend davon ist der Leistungshalbleiterschalter ein abschaltbarer Leistungshalbleiter mit einer gegensinnig parallel dazu geschalteten Freilaufdiode.

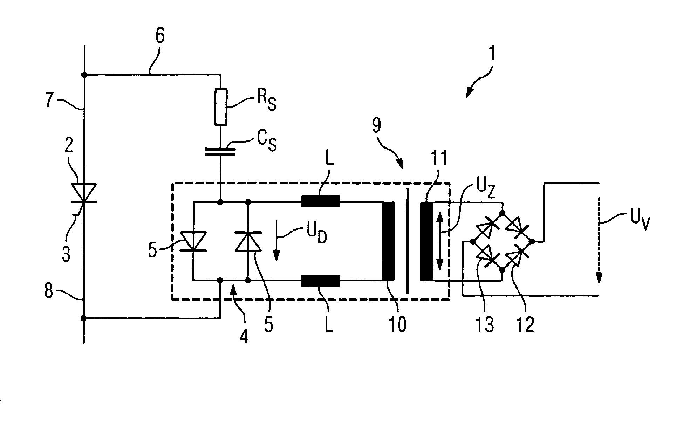

Weitere Vorteile der Erfindung sind Gegenstand der nachfolgenden Beschreibung von Ausführungsbeispielen der Erfindung unter Bezug auf die Figuren der Zeichnung, wobei die
- Figur: ein Ausführungsbeispiel der erfindungsgemäßen Stromrichterschaltung zeigt.

Die Figur zeigt ein Schaltbild eines Ausführungsbeispiels der erfindungsgemäßen Stromrichterschaltung 1. Die Stromrichterschaltung 1 umfasst einen als Thyristor 2 ausgebildeten Leistungshalbleiterschalter, der mit Hilfe eines elektrischen Steuersignals an seinem Gateanschluss 3 von einem nicht leitenden Zustand, also einem hochohmigen Leitungszustand, in einen leitenden Zustand, also niederohmigen Leistungszustand, überführt werden kann. Dabei ist der Thyristor 2 in Reihe zu einer Vielzahl von figürlich nicht dargestellten Thyristoren geschaltet, die eine zu der in der Figur gezeigten Stromrichterschaltung 1 identische Stromrichterschaltung aufweisen. Durch diese Reihenschaltung von Thyristoren ist ein Stromrichterventil ausgebildet, das bei der Energieverteilung und -übertragung beispielsweise zur Hochspannungsgleichstromübertragung, zur Blindleistungskompensation oder dergleichen verwendet wird. Dabei bilden die Stromrichterventile eine Brückenschaltung aus, die als Umrichter bezeichnet wird. Der Umrichter umfasst auch eine Schutz- und Regelungseinheit, die auf einem Potenzial liegt, das nahe dem Erdpotenzial ist.

Zum Erzeugen der Zünd- oder Steuersignale am Gateanschluss 3 des Thyristors 2 ist eine figürlich nicht dargestellte Ansteuereinheit vorgesehen, die über einen Lichtwellenleiter mit der Regelungseinheit verbunden ist. Die Regelungseinheit erzeugt eine Folge von optischen Steuersignalen, die von der jeweiligen Ansteuereinheit in elektrische Steuersignale am Gateanschluss 3 umgewandelt werden. Die hierzu benötigte Energie wird durch die Stromrichterschaltung 1 bereitgestellt, die ausgangsseitig die eine Versorgungsspannung U_{V} bereitstellt.

Zur originären Spannungserzeugung dient eine Diodeneinheit 4, die aus zwei gegensinnig parallel zueinander geschalteten Dioden 5 besteht. Die Diodeneinheit 4 ist in einem Parallelzweig 6 zum Thyristor 2 angeordnet, der einen Anodenanschluss 7 des Thyristors 2 mit dem Kathodenanschluss 8 des Thyristors 2 verbindet. In dem Parallelzweig 6 ist eine Schutzbeschaltung angeordnet, die aus einem Strombegrenzungswiderstand R_{S} sowie einem Schutzkondensator C_{S} besteht, die in Reihe zueinander angeordnet sind. Die Schutzbeschaltung, die im englischen Sprachraum auch als "Snubber" bezeichnet wird, dient zum Schutz des Thyristors 2 insbesondere vor schnellen Spannungsanstiegen und vor hohen Strombelastungen.

Die Diodeneinheit 4 ist ebenfalls im Parallelzweig 6 in Reihenschaltung zum Begrenzungswiderstand R_{S} und dem Schutzkondensator C_{S} angeordnet. In Folge des Schaltens des Thyristors 2 zwischen einem hochohmigen und einem niederohmigen Zustand kommt es zu einem Stromfluss über den Parallelzweig 6 und somit zu einem Stromfluss durch die Diodeneinheit 4. Dieser Stromfluss kann aufgrund der gegensinnig parallelen Anordnung der Dioden 5 in beiden Richtungen erfolgen. An den Dioden 5 fällt aufgrund dieses Beschaltungsstromes eine wechselförmige Durchlassspannung U_{D} ab, deren Amplitude über einen weiten Bereich von Stromstärken nahezu konstant ist. Die Durchlassspannung U_{D} wird im Folgenden als Speisespannung U_{D} bezeichnet.

Der Diodeneinheit 4 ist ein Transformator 9 parallel geschaltet. Mit anderen Worten ist eine Primärwicklung 10 des Transformators mit den Ausgangsklemmen der Diodeneinheit 4 verbunden. Bei der Speisespannung U_{D} handelt es sich um eine Wechselspannung, so dass an einer Sekundärwicklung 11 des Transformators eine Zwischenspannung U_{Z} erzeugbar ist, die eine für die jeweils nachgeschalteten Komponenten zweckmäßig hohe Amplitude aufweist. Die von der Sekundärwicklung 11 bereitgestellte wechselförmige Zwischenwechselspannung U_{Z} wird schließlich an den Eingang eines Gleichrichters 12 gelegt, der mit anderen Worten mit der Sekundärwicklung 11 des Transformators 9 verbunden ist. Der beispielsweise aus Dioden 13 bestehende Gleichrichter 12, stellt ausgangsseitig die gewünschte Versorgungsspannung U_{V} als Gleichspannung bereit.

Zwischen die Diodeneinheit 4 und den Transformator 9 sind Filtermittel L geschaltet, die beispielsweise als üblicher Tiefpass ausgebildet sind.

## Patentansprüche

1. Stromrichterschaltung (1) zum Erzeugen einer Versorgungsspannung mit
- einem Leistungshalbleiterschalter (2),
- Spannungserzeugungsmitteln (4) in einem Parallelzweig (6) zum Leistungshalbleiterschalter (2), die zur Erzeugung einer Speisespannung (U_{D}) eingerichtet sind,
- Umspannmitteln (9), die mit den Spannungserzeugungsmitteln (4) verbunden und zum Übertragen der Speisespannung (U_{D}) zu einer Zwischenwechselspannung (U_{Z}) eingerichtet sind, und
- einer Gleichrichtereinheit (12) zum Gleichrichten der Zwischenwechselspannung (U_{Z}) unter Gewinnung der Versorgungsspannung (U_{V}),
**dadurch gekennzeichnet, dass** die Spannungserzeugungsmittel als Diodeneinheit (4) realisiert sind, die gegensinnig parallel zueinander geschaltete Dioden (15) aufweist, wobei die Diodeneinheit (4) im Parallelzweig (6) zum Leistungshalbleiterschalter (2) angeordnet ist.

2. Stromrichterschaltung (1) nach Anspruch 1,
**dadurch gekennzeichnet, dass** in dem parallel zum Leistungshalbleiterschalter (2) geschalteten Parallelzweig (6) ein Strombegrenzungswiderstand (R_{S}), ein Schutzkondensator (C_{S}) und die Diodeneinheit (4) in Reihe angeordnet sind.

3. Stromrichterschaltung (1) nach Anspruch 2,
**dadurch gekennzeichnet, dass**
die Diodeneinheit (4) mit der Kathode (8) des Leistungshalbleiterschalters (2) direkt verbunden und über den Schutzkondensator (C_{S}) und den Begrenzungswiderstand (R_{S}) mit der Anode (7) des Leistungshalbleiterschalters (2) verbunden ist.

4. Stromrichterschaltung (1) nach einem der vorhergehenden Ansprüche,
**dadurch gekennzeichnet, dass** die Umspannmittel ein Transformator (9) sind, wobei eine erste Wicklung (10) des Transformators (9) mit der Diodeneinheit (4) und eine zweite Wicklung (11) des Transformators (9) mit der Gleichrichtereinheit (12) verbunden sind.

5. Stromrichterschaltung (1) nach einem der vorhergehenden Ansprüche,
**gekennzeichnet durch**
Filtermittel (L).

6. Stromrichterschaltung (1) nach Anspruch 5,
**dadurch gekennzeichnet, dass** die Filtermittel (L) zwischen die Diodeneinheit (4) und die
Umspannmittel (9) geschaltet sind.

7. Stromrichterschaltung (1) nach einem der vorhergehenden Ansprüche,
**dadurch gekennzeichnet, dass** der Leistungshalbleiterschalter ein Thyristor (2) ist.

8. Stromrichterschaltung (1) nach einem der vorhergehenden Ansprüche 1 bis 7,
**dadurch gekennzeichnet, dass** der Leistungshalbleiterschalter (2) ein abschaltbarer Leistungshalbleiter mit einer gegensinnig parallel dazu geschalteten Freilaufdiode ist.

9. Umrichter mit einer Brückenschaltung von Stromrichterventilen, wobei die Stromrichterventile eine Reihenschaltung aus Stromrichterschaltungen (1) nach einem der vorhergehenden Ansprüche aufweisen.

## Claims

1. Power converter circuit (1) for generating a supply voltage comprising
- a power semiconductor switch (2),
- voltage generating means (4) connected in a parallel branch (6) with respect to the power semiconductor switch (2), which are designed for generating a feed voltage (U_{D}),
- transformation means (9), which are connected to the voltage generating means (4) and are designed for transforming the feed voltage (U_{D}) to an intermediate AC voltage (U_{Z}), and
- a rectifier unit (12) for rectifying the intermediate AC voltage (U_{Z}) to obtain the supply voltage (U_{V}),
**characterized in that**
the voltage generating means are realized as a diode unit (4) having diodes (15) connected in parallel with one another in opposite senses, the diode unit (4) being arranged in parallel branch (6) with respect to the power semiconductor switch (2).

2. Power converter circuit (1) according to Claim 1, **characterized in that** a current limiting resistor (R_{S}), a protective capacitor (C_{S}) and the diode unit (4) are arranged in series in the parallel branch (6) connected in parallel with the power semiconductor switch (2).

3. Power converter circuit (1) according to Claim 2,
**characterized in that**
the diode unit (4) is directly connected to the cathode (8) of the power semiconductor switch (2) and is connected to the anode (7) of the power semiconductor switch (2) via the protective capacitor (C_{S}) and the limiting resistor (R_{S}).

4. Power converter circuit (1) according to any of the preceding claims,
**characterized in that**
the transformation means are a transformer (9), a first winding (10) of the transformer (9) being connected to the diode unit (4) and a second winding (11) of the transformer (9) being connected to the rectifier unit (12).

5. Power converter circuit (1) according to any of the preceding claims,
**characterized by**
filter means (L).

6. Power converter circuit (1) according to Claim 5,
**characterized in that**
the filter means (L) are connected between the diode unit (4) and the transformation means (9).

7. Power converter circuit (1) according to any of the preceding claims,
**characterized in that**
the power semiconductor switch is a thyristor (2).

8. Power converter circuit (1) according to any of the preceding Claims 1 to 7,
**characterized in that**
the power semiconductor switch (2) is a turn-off power semiconductor with a freewheeling diode connected in parallel therewith in the opposite sense.

9. Converter comprising a bridge circuit of power converter valves, wherein the power converter valves have a series circuit composed of power converter circuits (1) according to any of the preceding claims.

## Revendications

1. Montage ( 1 ) convertisseur de production d'une tension d'alimentation comprenant
- un commutateur ( 2 ) de puissance à semiconducteur,
- des moyens ( 4 ) de production d'une tension dans une branche ( 6 ) parallèle au commutateur ( 2 ) de puissance à semiconducteur, qui sont conçus pour la production d'une tension ( U_{D} ) d'alimentation,
- des moyens ( 9 ) de transformation, qui sont reliés aux moyens ( 4 ) de production d'une tension et qui sont conçus pour la transformation de la tension ( U_{D} ) d'alimentation en une tension ( U_{Z} ) alternative intermédiaire, et
- une unité ( 12 ) formant redresseur pour le redressement de la tension ( U_{Z} ) alternative intermédiaire en obtenant la tension ( U_{V} ) d'alimentation,
**caractérisé en ce que**
les moyens de production d'une tension sont réalisés sous la forme d'une unité ( 4 ) de diode, qui a des diodes ( 15 ) montées tête-bêche en parallèle l'une à l'autre, l'unité ( 4 ) de diode étant montée dans la branche ( 6 ) parallèle du commutateur ( 2 ) de puissance à semiconducteur.

2. Montage ( 1 ) de convertisseur suivant la revendication 1, **caractérisé en ce que**,
dans la branche ( 6 ) en parallèle montée en parallèle au commutateur ( 2 ) de puissance à semiconducteur, sont montés en série une résistance ( R_{S} ) de limitation du courant, un condensateur ( C_{S} ) de protection et l'unité ( 4 ) de diode.

3. Montage ( 1 ) de convertisseur suivant la revendication 2,
**caractérisé en ce que**
l'unité ( 4 ) de diode est reliée directement à la cathode ( 8 ) du commutateur ( 2 ) de puissance à semiconducteur et est reliée par le condensateur ( C_{S} ) de protection et la résistance ( R_{S} ) de limitation à l'anode ( 7 ) du commutateur ( 2 ) de puissance à semiconducteur.

4. Montage ( 1 ) de convertisseur suivant l'une des revendications précédentes,
**caractérisé en ce que**
les moyens de transformation sont un transformateur ( 9 ), un premier enroulement ( 10 ) du transformateur ( 9 ) étant relié à l'unité ( 4 ) de diode et un deuxième enroulement ( 11 ) du transformateur ( 9 ) étant relié à l'unité ( 12 ) formant redresseur.

5. Montage ( 1 ) de convertisseur suivant l'une des revendications précédentes,
**caractérisé par**
des moyens ( L ) de filtrage.

6. Montage ( 1 ) de convertisseur suivant la revendication 5,
**caractérisé en ce que**
les moyens ( L ) de filtrage sont montés entre l'unité ( 4 ) de diode et les moyens ( 9 ) de transformation.

7. Montage ( 1 ) de convertisseur suivant l'une des revendications précédentes,
**caractérisé en ce que**
le commutateur de puissance à semiconducteur est un thyristor ( 2 ).

8. Montage ( 1 ) de convertisseur suivant l'une des revendications précédentes 1 à 7,
**caractérisé en ce que**
le commutateur ( 2 ) de puissance à semiconducteur est un commutateur de puissance pouvant être bloqué, ayant une diode de roue libre montée tête-bêche en parallèle à celui-ci.

9. Convertisseur ayant un circuit en pont de soupapes de convertisseur, les soupapes de convertisseur ayant un circuit série composé de montage ( 1 ) de convertisseur suivant l'une des revendications précédentes.
